# EUROPÄISCHE PATENTSCHRIFT

(11) **EP 0 788 276 B1**
(45) Veröffentlichungstag und Bekanntmachung des Hinweises auf die Patenterteilung: **09.01.2002**
(21) Anmeldenummer: 96116936.4
(22) Anmeldetag: 22.10.1996
(51) Int. Cl.: H04N 5/18

(54) **Videosignal-Klemmschaltung**
Video signal clamping circuit
Circuit de verrouillage pour un signal vidéo

(30) Priorität: 31.01.1996 DE 19603316
(43) Veröffentlichungstag der Anmeldung: 06.08.1997
(73) Patentinhaber: Micronas GmbH, 79108 Freiburg (DE)
(72) Erfinder: Elmis, Herbert, Dipl.-Ing., 79211 Denzlingen (DE); Köhne, Heinrich, Dipl.-Ing., 79279 Vörstetten (DE); Alrutz, Herbert, 79102 Freiburg (DE); Zibold, Hermann, Dipl.-Ing., 79341 Kenzingen (DE)

(56) Entgegenhaltungen:
- EP-A- 0 280 123
- EP-A- 0 609 759
- DE-A- 3 817 421
- DE-A- 4 215 668
- US-A- 3 970 777
- US-A- 4 517 586
- US-A- 4 707 741
- US-A- 5 191 422

## Beschreibung

Die Erfindung betrifft eine Videosignal-Klemmschaltung zur Anpassung des Gleichspannungspegels eines Videosignalgemisches an den Verarbeitungs- oder Aussteuerbereich einer Videosignalverarbeitungseinrichtung, insbesondere einer digitalen. Derartige Klemmschaltungen sind in verschiedenen Ausführungsformen bekannt. Auch bei der Verarbeitung analoger Videosignalgemische in Fernsehempfängern werden Klemmschaltungen verwendet, weil für eine befriedigende Bildwiedergabe ein definierter Videogleichpegel erforderlich ist, der bei der Übertragung zunächst verloren geht. Zur Rekonstruktion des Gleichpegels dienen vorgegebene Bezugspegel oder Bezugswerte im Videosignalgemisch, insbesondere die sogenannte Schwarzschulter. Auf der Empfängerseite wird die Schwarzschulter mittels der Klemmschaltung wieder auf einen vorgegebenen Gleichspannungswert gebracht, der mit der Wiedergabekennlinie der Bildröhre fest verkoppelt ist.

Außer der Schwarzschulter kann zur Rekonstruktion des Gleichpegels auch der Zeilensynchronimpuls dienen, weil dessen Amplitude und Pegellage durch die jeweilige Modulationsvorschrift vorgegeben ist. Abweichungen von der Norm, insbesondere bei Empfangsstörungen, wirken sich insbesondere auf den Synchronimpuls aus, wodurch die Gleichpegelrekonstruktion gestört wird. Es ist daher üblich, für die Gleichpegelrekonstruktion nur die Schwarzschulter heranzuziehen.

Bei der digitalen Verarbeitung eines zuvor digitalisierten Videosignalgemisches ist ebenfalls auf der Empfängerseite der ursprüngliche, auf der Übertragung verlorene Gleichspannungspegel wiederherzustellen. Hierbei tritt jedoch noch ein weiteres Problem auf, denn der Verarbeitungsbereich der digitalen Verarbeitungseinrichtungen, insbesondere der Aussteuerbereich des Analog/Digital-Umsetzers ist relativ gering, so daß zur Digitalisierung der Aussteuerbereich möglichst weitgehend ausgenutzt werden muß. Dies wird erstens mittels einer automatischen Verstärkungsregelung erreicht, mit der die Signalamplitude an den Umfang des Aussteuerbereiches angepaßt wird und zweitens mittels der Klemmschaltung, die das verstärkte Videosignal auf einen vorgegebenen Gleichspannungspegel legt.

Aus DE-A-42 16 668 ist beispielsweise eine Videosignal-Klemmschaltung bekannt, bei der nach dem Trennkondensator das Videosignal zur weiteren Verarbeitung mittels eines Analog/Digital-Umsetzers digitalisiert wird. Die Klemmung erfolgt mittels einer positiven und negativen Stromquelle, die je nach dem Vorzeichen des Klemmpegel-Soll-Ist-Vergleichs mit einem pulsweitenmodulierten Steuersignal aktiviert werden. Der Auslösezeitpunkt des Klemmimpulses erfolgt während des Zeilenrücklaufintervalls. Die vom Klemmimpuls bewirkte Ladung oder Entladung des Trennkondensators paßt sich durch die Pulsweitensteuerung der Klemmimpulse an den jeweiligen Klemmzustand an.

Es ist Aufgabe der Erfindung, eine verbesserte Videosignal-Klemmschaltung zur Wiederherstellung des Gleichspannungspegels anzugeben. Dabei soll die Klemmschaltung normgerechte und nichtnormgerechte Videosignalgemische so verarbeiten, daß sie möglichst rasch einen stabilen Klemmpegelzustand erreicht und daß sie raschen, insbesondere netzfrequenten Gleichpegelschwankungen im Videosignalgemisch folgen kann, ohne die Bildstabilität unter guten Signalbedingungen zu verschlechtern.

Die Aufgabe wird durch eine Videosignal-Klemmschaltung entsprechend den Merkmalen des Anspruchs 1 wie folgt gelöst:
- die Videosignal-Klemmschaltung enthält zur Anpassung des Gleichspannungspegels eines Videosignalgemisches an den Verarbeitungsbereich einer Videosignal-Verarbeitungseinrichtung einen Trennkondensator im Videosignalpfad, eine steuerbare Stromquelle, die mit dem Klemmkondensator am zu klemmenden Kondensatoranschluß verbunden ist und diesen mit einem in Größe und Vorzeichen einstellbaren Klemmstrom speist, und eine Klemmpegel-Vergleichsschaltung zur Einstellung des Klemmstromes in Abhängigkeit vom Gleichspannungspegel des Videosignalgemisches, wobei die Videosignal-Klemmschaltung durch folgende Merkmale gekennzeichnet ist:

- der Klemmstrom ist in einem ersten Modus, der einem nicht normgerechten Videsosignalgemisch und/oder einem noch nicht im eingeschwungenen Klemmzustand befindlichen Videosignalgemisch entspricht, vom Soll-Ist-Vergleich eines ersten Bezugswertes und eines ersten Vergleichswertes abhängig,
- der Klemmstrom ist in einem zweiten Modus, der einem normgerechten und/oder einem im eingeschwungenen Klemmzustand befindlichen Videosignalgemisch entspricht, vom Soll-Ist-Vergleich eines vom ersten Bezugswert verschiedenen zweiten Bezugswertes und eines vom ersten Vergleichswert verschiedenen zweiten Vergleichswertes abhängig ist, und
- eine Steuereinrichtung bestimmt den jeweiligen Modus aus dem Videosignalgemisch.

Ein Trennkondensator im analogen Videosignalpfad wird an seinem gleichspannungsfreien Trennkondensator-Anschluß von einer steuerbaren Stromquelle mittels eines Klemmstromes impulsweise oder mit einem Konstantstrom auf- oder entladen, wobei der Wert und das Vorzeichen des Klemmstromes von einer Klemmpegel-Vergleichsschaltung gesteuert sind, die je nach dem Klemmungszustand oder je nach dem Videosignalgemisch einen ersten oder zweiten Bezugswert des analogen oder digitalisierten Videosignalgemisches mit entsprechenden Vergleichswerten vergleicht.

Die Erfindung nutzt zur Pegelnachführung eine steuerbare Stromquelle, deren hoher Innenwiderstand mit der Kapazität des Trennkondensators eine große Zeitkonstante bildet, und damit die niederen Frequenzen des Videosignals nicht beeinflußt. In gleicher Weise findet auch keine Modulation des Klemmpegels durch den Bildinhalt des Videosignals statt, wie dies bei der Verwendung von Widerständen zur Klemmung der Fall wäre. Widerstände machen zudem die Zufuhr von hohen, in der Regel zusätzlichen, Versorgungsspannungen erforderlich, damit die Widerstandswerte relativ hoch gehalten werden können. Dies erübrigt sich, wenn die Klemmung aus steuerbaren Stromquellen erfolgt. Durch die Variationsmöglichkeit der steuerbaren Stromquellen lassen sich kleine oder große Konstantströme oder Stromimpulse bilden, die adaptiv den unterschiedlichen Pegelschwankungen des Videosignalgemisches folgen und diese rasch ausregeln können. Wenn die Pegelschwankungen jedoch sehr gering sind, dann können die Klemmströme sehr klein gehalten werden oder gar gegen Null gehen, wodurch jede Bildzeile sehr feinfühlig nachgeregelt werden kann, was bei einer nichtadaptiven Klemmung nicht der Fall ist, wie bereits oben ausgeführt wurde.

Die Erfindung lehrt insbesondere, daß je nach dem Betriebszustand oder Modus unterschiedliche Bezugspegel zu verwenden sind. Im ersten Modus wird für sehr gestörte, netzüberlagerte, noch nicht stabil geklemmte oder nicht normgerechte Videosignalgemische der Synchronimpulsdach- oder bei anderer Polarität der Synchronimpulsbodenwert als Bezugspegel verwendet. Dies ermöglicht auch eine rasche Pegelstabilisierung beim Kanalwechsel, so daß rasch in den üblichen Standard-Klemmbetrieb - dies entspricht dem zweiten Modus - umgeschaltet werden kann. Hierbei dient dann die Schwarzschulter als Bezugswert, wobei durch eine Torschaltung Störsignale ausgeblendet werden.

Die steuerbare Stromquelle enthält entweder eine Differenzstromquelle oder in getrennter Form eine positive und eine negative Stromquelle, deren Auswahl durch das Vorzeichen des digitalen Steuersignals der Klemmpegel-Vergleichsschaltung erfolgt.

Im eingeschwungenen Betrieb, es handelt sich also um normgerechte Signale und der Klemmpegel ist bereits richtig eingestellt, ist es sinnvoll, daß im Falle der Verwendung von Klemmimpulsen, diese im wesentlichen nur während eines kurzen Zeitintervalls innerhalb des Zeilenrücklaufintervalls auftreten, weil hierbei die Rückwirkung auf das Videosignal am wenigsten stört. Wird dagegen bei der Klemmung ein konstanter Klemmstrom verwendet, dann soll der gegenüber dem Impulsstrom erheblich kleinere Konstantstrom während eines oder mehrerer ganzer Bildwiedergabe-Zeilenintervalle aufrecht erhalten bleiben - die Rückwirkung ist dabei minimal.

Die Erfindung wird nun anhand der Figuren der Zeichnung näher erläutert:
Fig. 1 zeigt schematisch eine Videosignal-Klemmschaltung mit digitaler Ansteuerung nach dem Stand der Technik,
Fig. 2 zeigt die zugehörige Klemmung mittels eines Zeitdiagramms und
Fig. 3 zeigt schematisch ein Ausführungsbeispiel für eine Klemmschaltung nach der Erfindung.

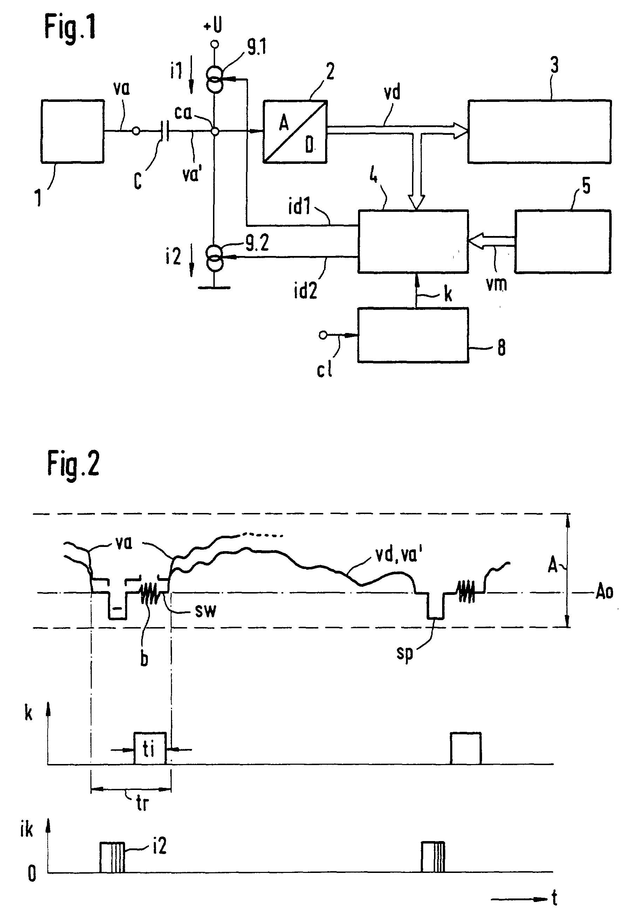

In Fig. 1 ist schematisch eine bekannte (vgl. DE-A- 42 16 668) Videosignal-Klemmschaltung dargestellt, wobei die Steuerung der Klemmschaltung durch ein digitalisiertes Videosignalgemisch vd bestimmt wird. (Hinweis: in der folgenden Beschreibung wird das Videosignalgemisch vereinfacht meist als Videosignal bezeichnet, obwohl es in der Regel die üblichen Farb-Bild-Austast-Synchronsignalkomponenten = FBAS-Signal enthält.) Eine beliebige Video-Signalquelle 1 liefert ein analoges Videosignal va, dessen Gleichpegel unerheblich ist, weil im Videosignalzweig ein Trennkondensator C liegt, der den vorhandenen Gleichpegel im analogen Videosignal va zurückhält. In der Video-Signalquelle 1 können selbstverständlich auch Mittel zur automatischen Verstärkungsregelung vorhanden sein, so daß davon ausgegangen werden kann, daß das analoge Videosignal in einem vorgegebenen Amplitudenbereich liegt. Der gleichspannungsfreie Trennkondensator-Anschluß ca mit dem Videosignal va' ist mit einem Analog/Digital-Umsetzer 2, der auch als Eingangsstufe einer digitalen Videosignalverarbeitungsschaltung 3 angesehen werden kann, und mit einer ersten und einer zweiten Stromquelle 9.1 9.2 verbunden. Der Ausgang des Digital/Analog-Umsetzers 2 liefert das digitalisierte Videosignal vd, das mit einer digitalen Videosignalverarbeitungsschaltung 3 und einer Klemmpegel-Vergleichsschaltung 4 verbunden ist. Die digitale Videosignal-Verarbeitungsschaltung 3 stellt schematisch die weitere Signalverarbeitung im Fernsehempfänger dar, die hier jedoch nicht weiter interessiert. In der Klemmpegel-Vergleichsschaltung 4 wird ein von einer Speichereinrichtung 5 zugeführter Klemmpegelvergleichswert vm mit dem entsprechenden Signalbereich oder Bezugswert sw des digitalisierten Videosignals vd verglichen. Der Vergleich bildet ein Differenzsignal, das bei Pegelunterschreitung (vgl. Fig. 2) einen erstes oder zweites Steuersignal id1, id2 für die erste oder zweite Stromquelle 9.1,9.2 auslöst. Diese lösen für die Dauer der Steuersignale einen ersten oder zweiten impulsförmigen Klemmstrom i1, i2 aus, der den Klemmkondensator C über den Kondensatoranschluß ca auf- oder entlädt. Der Wert des ersten oder zweiten Steuersignals id1, id2 bewirkt eine entsprechende Dauer des ersten oder zweiten Klemmimpulses, wodurch pulsweitenmodulierte Impulse i1, i2 erzeugt werden. Damit paßt sich die Auf- oder Entladung an die Klemmpegelabweichung an, wodurch eine Beschleunigung des Klemmvorganges erreicht wird.

Damit der Spannungsvergleich in der Klemmpegel-Vergleichsschaltung 4 zum richtigen Zeitpunkt während der hinteren Schwarzschulter sw des Videosignals va, va', vd durchgeführt wird, liefert eine Steuereinrichtung 8 einen Torimpuls k mit der Impulsdauer ti an die Vergleichsschaltung 4.

In Fig. 2 sind die zugehörigen Signale in drei untereinander angeordneten Zeitdiagrammen dargestellt. Die erste Zeile zeigt das digitalisierte Videosignal vd, das bezüglich seines digital definierten (- damit nichtrealen -) Gleichspannungspegels dem realen Gleichspannungspegel des geklemmten analogen Videsosignals va' entspricht und im zeitlichen Verlauf bis auf einen Gleichpegelunterschied identisch zum eingangsseitigen analogen Videosignal va ist, das in Fig. 2 lediglich angedeutet ist. Der Aussteuerbereich der digitalen Videosignal-Verarbeitungseinrichtung 3 und insbesondere des Analog/Digital-Umsetzers 2 entspricht beispielsweise dem dargestellten Bereich A. Die Klemmschaltung muß nun bewirken, daß der Schwarzschulterbezugswert sw des Videosignals vd mit einem Bezugswert Ao des digitalen Aussteuerbereiches A übereinstimmt. In der Regel liegt dieser digitale Bezugswert nicht mittig zum Aussteuerbereich A des Analog/Digital-Umsetzers 2. Der Zeilensynchronimpuls mit seinem Dachgleichwert sp stört die Schwarzschulterklemmung und wird beispielsweise durch den Torimpuls k, vgl. letzte Zeile, ausgeblendet. Dadurch ist während des Zeilenrücklaufintervalls tr und des Torimpulses k die Schwarzschulter sw der negativste Signalwert; die Farbsynchronimpule (=Farbburst) b müssen dabei weggefiltert oder ausgeblendet sein. Wegen der Polarität des Videosignals vd in Fig. 2 kann der Synchronimpulsdachgleichwert sp auch als Synchronimpulsbodengleichwert bezeichnet werden.

Von den impulsförmigen Klemmströmen i1 bzw i2 zur Auf- oder Entladung des Klemmkondensators C ist in der letzten Zeile als Klemmstrom ik der pulsweitenmodulierte Entladeimpuls i2 dargestellt. Der impulsförmige Entladestrom i2 wird etwa zum Zeitpunkt des Synchronimpulses ausgelöst, damit die hinteren Schwarzschulter sw für die Pegelbestimmung während des Torintervalles nicht gestört wird.

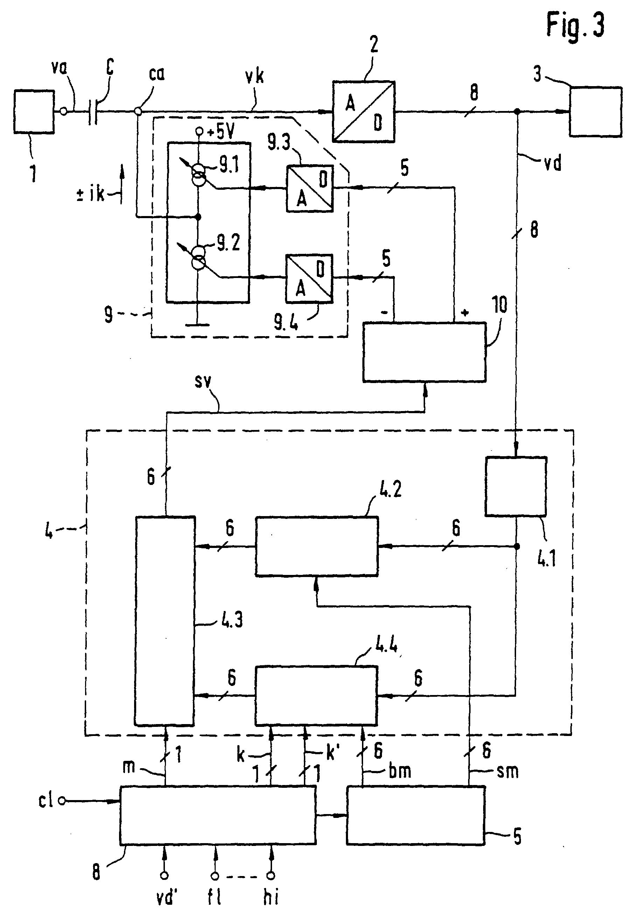

In Fig. 3 ist schematisch das Blockschaltbild eines einfachen Ausführungbeispiels einer Videosignal-Klemmschaltung nach der Erfindung dargestellt. Wie in Fig. 1 wird je nach Gleichpegellage ein Auf- bzw. Entladestrom von einer steuerbaren Stromquelle 9 als Klemmstrom ik erzeugt, wobei dessen Wert digital einstellbar ist. Im Ausführungsbeispiel von Fig. 3 soll der Klemmstrom ik nicht impulsförmig sein, sondern mindestens während einer ganzen Bildwiedergabezeile konstant bleiben. Eine erste oder zweite steuerbare Stromquelle 9.1 bzw. 9.2 wird mittels eines ersten oder zweiten Digital/Analog-Umsetzers 9.3 bzw. 9.4 zur Bildung des Auflade- oder Entladestromes angesteuert. Die beiden Stromquellen 9.1 und 9.2 können wie die übrige Schaltung monolithisch integrierbar in CMOS-Technik ausgeführt sein. Weil die Klemmströme ik konstant und nicht impulsförmig sind, erfordern sie keine besonders hohe oder niedere Versorgungsspannungen oder gar eine Pulsweitensteuerung wie in der bekannten Schaltung von Fig. 1.

Der Pfad für das Videosignalgemisch va, va', vd ist identisch zu Fig. 1 - gleiche Funktionseinheiten haben daher auch gleiche Bezugszeichen. An die Videosignalquelle 1, die das analoge Videosignalgemisch va liefert, schließt sich zur Potentialtrennung der Trenn- oder Klemmkondensator C an, dessen Anschluß ca sowohl mit dem Ausgang der gesteuerten Stromquelle 9 als auch mit dem Eingang des Analog/Digital-Umsetzers 2 verbunden ist, dessen Ausgang das digitalisierte Videosignalgemisch vd liefert.

Zur Steuerung der Stromquelle 9 wird das digitalisierte Videosignal vd wie in Fig. 1 einer Klemmpegel-Vergleichsschaltung 4 zugeführt, die den jeweiligen Bezugspegel mit einem Vergleichswert vergleicht und aus der jeweiligen Differenz ein vorzeichenbehaftetes Steuersignal sv mit 6 Bit erzeugt, das vom Vorzeichen befreit den ersten und zweiten Digital/Analog-Umsetzer 9.3 und 9.4 steuert. Die Auswahl erfolgt durch das Vorzeichen-Bit im Steuersignal sv und einen elektronischen Umschalter 10. Eine Steuereinrichtung 8 erzeugt die erforderlichen Steuerimpulse, insbesondere einen Torimpuls k für das Meßintervall bei der Schwarzschulter-Pegelmessung. Erforderlichenfalls liefert die Steuereinrichtung 8 weitere Torimpulse k'. Dies kann z.B. der Fall sein, wenn das digitalisierte Videosignal vd mittels eines digitalen Filters 4.1 zur Störsignalbefreiung, beispielsweise zur Befreiung vom Farbsynchronsignal b (=Farbburst), zu sehr verzögert wird. Die steuerbare Stromquelle 9 kann in jeder Stromquelle 9.1, 9.2 eine Vielzahl von parallelschaltbaren MOS-Transistoren als Teilstromquellen oder als eine Art Strombank enthalten, die einzeln oder in Kombination direkt von den digitalen Steuersignalen sv ansteuerbar sind. Dabei können die Digital/Analog-Umsetzer 9.3, 9.4 entfallen. Die Stromquelle 9 kann auch als Differenzstromquelle oder in anderer Form ausgebildet sein, wichtig ist allein, daß das Vorzeichen und die Höhe des Klemmstromes ik und/oder dessen Dauer bei einem impulsförmigen Betrieb insbesondere digital einstellbar sind.

Der Steuereinrichtung 8 sind verschiedene Signale zugeführt, nämlich ein Systemtakt cl, ein mit dem Ablenksystem verkoppeltes Rückschlagsignal fl und ein modifiziertes Videosignal vd', das beispielsweise in getrennter Form die einzelnen Synchronkomponenten enthalten kann. Weitere zugeführte Signale werden schematisch als Hilfssignale hi dargestellt. Die Vergleichspegel sm, bm für den Klemmpegelvergleich können entweder wie in Fig. 1 einer Speichereinrichtung 5 entnommen werden oder werden über ein digitales Bussystem zugeführt.

Eine wesentliche Verbesserung des Klemmverhaltens wird nach der Erfindung erreicht, wenn zwischen einem eingeschwungenen Betriebszustand mit einem normgerechten und einem nichteingeschwungenen Zustand oder einem Zustand mit einem nicht normgerechten Videosignalgemisch va, va', vd unterschieden wird. Für jeden dieser Zustände kann das Klemmverhalten dann getrennt optimiert werden. Für den nicht normgerechten Klemmzustand, der wie bereits angegeben auch als erster Betriebs-Modus bezeichnet wird, empfiehlt sich die Klemmung auf den Synchronimpulsdachwert sp. Genau genommen handelt es sich bei der Polarität des Videosignalgemisches nach Fig. 2 um den Synchronimpulsbodenwert, weil dieser Wert bei der üblichen Modulation dem niedersten Signalwert entspricht. Die Auffindung des Synchronimpulsdachwertes sp oder -bodenwertes erfolgt dabei durch einen Spitzenwertdetektor 4.1 der den gemessenen Spitzenwert mit einem zugeführten Synchronimpulsdach-Vergleichswert sm vergleicht. Sein 6-Bit breites Ausgangssignal wird auf einen Mode-Schalter 4.3 geführt, der von einem Mode-Steuersignal m aus der Steuereinrichtung 8 gesteuert wird. Bei der Klemmung auf das Synchronimpulsdach sp ist keinerlei Torschaltung erforderlich, weil das Impulsdach bei den üblichen Modulations- und Umsetzungsverfahren im Regelfall (vergl. Fig. 2) den niedersten/höchsten Spannungswert hat. Störsignale werden durch das digitale Filter 4.1 ausgefiltert. Selbstverständlich ist auch für den Spitzendetektor 4.2 ein eigenes, speziell angepaßtes Filter denkbar. Ohne Torschaltung reagiert die Klemmschaltung in diesem Modus auch sehr schnell auf geänderte Pegellagen.

Der normale Klemmbetrieb mit normgerechten Signalen entspricht einem zweiten Betriebs-Modus, bei dem die Klemmung auf den Schwarzschulterbezugswert sw bezogen wird. Hierzu dient eine Schwarzschulter-Vergleichsschaltung 4.4, deren 6-Bit breites Ausgangssignal dem Mode-Umschalter 4.3 zugeführt ist. Der Schwarzschulterbezugswert sw wird dabei mit einem gespeicherten Schwarzschulter-Vergleichswert bm verglichen, wobei der Vergleich durch den Torimpuls k und gegebenenfalls weitere Torimpulse k' gesteuert ist. Durch die Torbildung können im hohen Maße Störsignale ausgeblendet werden, so daß die Klemmung ein sehr ruhig stehendes Bild liefert, auch wenn das Videosignal va sehr verrauscht empfangen wird, ansonsten aber einem normgerechten Signal entspricht.

Die Feststellung welcher Mode jeweils vorliegt, erfolgt in der Steuereinrichtung 8 und beruht auf bekannten Kriterien. Zur Feststellung eines normgerechten Zustandes und normgerechter Videosignalgemische kann beispielsweise das feste Frequenzverhältnis zwischen dem Farbsynchronsignal und der Zeilenfrequenz dienen. Durch die hohen Frequenzen ist dieses Kriterium relativ unempfindlich gegenüber Rauschen und anderen Störsignalen. Weitere Unterscheidungsverfahren verwenden z.B. geeignete Torschaltungen zur Auswertung charakteristischer Eigenschaften des Videosignalgemisches.

Das Ausführungsbeispiel ist in Fig. 3 als Blockschaltbild dargestellt und entsprechend beschrieben. Selbstverständlich können einzelne Funktionseinheiten, die sich auf die Verarbeitung von Daten beziehen, auch mittels programmierbarer Prozessoren realisiert werden.

## Patentansprüche

1. Videosignal-Klemmschaltung zur Anpassung des Gleichspannungspegels eines Videosignalgemisches (va, va', vd) an den Verarbeitungsbereich einer Videosignalverarbeitungseinrichtung (2, 3) mit
- einem Trennkondensator (C) im Videosignalpfad,
- einer steuerbaren Stromquelle (9), die mit dem Klemmkondensator (C) am zu klemmenden Kondensatoranschluß (ca) verbunden ist und diesen mit einem in Größe und Vorzeichen einstellbaren Klemmstrom (ik) speist, und
- einer Klemmpegel-Vergleichsschaltung (4) zur Einstellung des Klemmstromes (ik) in Abhängigkeit vom Gleichspannungspegel des Videosignalgemisches (va, va', vd),
**gekennzeichnet durch** folgende Merkmale:
- der Klemmstrom (ik) ist in einem ersten Modus, der einem nicht normgerechten Videosignalgemisch (va, va', vd) und/oder einem noch nicht im eingeschwungenen Klemmzustand befindlichen Videosignalgemisch (va', vd) entspricht, vom Soll-Ist-Vergleich eines ersten Bezugswertes (sp) und eines ersten Vergleichswertes (sm) abhängig,
- der Klemmstrom (ik) ist in einem zweiten Modus, der einem normgerechten und/oder einem im eingeschwungenen Klemmzustand befindlichen Videosignalgemisch (va',vd) entspricht, vom Soll-Ist-Vergleich eines vom ersten Bezugswert verschiedenen zweiten Bezugswertes (sw) und eines vom ersten vergleichswert verschiedenen zweiten Vergleichswertes (bm) abhängig, und
- eine Steuereinrichtung (8) bestimmt den jeweiligen Modus aus dem Videosignalgemisch (va, va', vd).

2. Klemmschaltung nach Anspruch 1, **dadurch gekennzeichnet, daß** die Klemmpegel-Vergleichsschaltung (4) als ersten Bezugswert im Videosignalgemisch (va', vd) einen Synchronimpulsdach- oder Synchronimpulsbodenwert (sp) und als zweiten Bezugswert im Videosignalgemisch (va', vd) einen Schwarzschulterbezugswert (sw) auswertet.

3. Klemmschaltung nach Anspruch 1 oder 2, **dadurch gekennzeichnet, daß** der Klemmstrom (ik) mindestens während einer ganzen Bildwiedergabezeile im wesentlichen konstant bleibt.

4. Klemmschaltung nach einem der Ansprüche 1 bis 3, **dadurch gekennzeichnet, daß** der Synchronimpulsdach- oder Synchronimpulsbodenwert (sp) mittels einer Extremwert-Detektoreinrichtung bestimmt ist.

5. Klemmschaltung nach Anspruch 4, **dadurch gekennzeichnet, daß** der Extremwert-Detektoreinrichtung ein mittels eines Filters (4.1) von Rausch- und/oder Nutzsignalanteilen gefiltertes Videosignalgemisch (va', vd) zugeführt ist.

6. Klemmschaltung nach Anspruch 2, **dadurch gekennzeichnet, daß** der Schwarzschulterbezugswert (sw) aus dem mittels eines Filters (4.1) und/oder eines von einem Torschaltsignal (k) gesteuerten Tores von Rausch- und/oder Nutzsignalanteilen befreiten Videosignalgemisch (va', vd) ermittelt ist, wobei das Tor von der Steuereinrichtung (8) während der hinteren Schwarzschulter des Videosignalgemisches (va', vd) geöffnet wird.

7. Klemmschaltung nach Anspruch 5 oder 6, **dadurch gekennzeichnet, daß** das Videosignalgemisch (va', vd) mittels des Filters (4.1) vom Farbsynchronsignal (b) befreit ist.

## Claims

1. A video signal clamping circuit for adapting the DC level of a composite video signal (va, va', vd) to the processing range of a digital video signal processing device (2, 3), said video signal clamping circuit comprising:
- an isolating capacitor (C) in the video signal path;
- a controlled current source (9) which is connected to the capacitor terminal (ca) to be clamped and supplies the latter with a clamping current (ik) adjustable in magnitude and sign; and
- a clamping level comparator circuit (4) for adjusting the clamping current (ik) in accordance with the DC level of the composite video signal (va, va', vd),
**characterized by** the following features:
- In a first mode, which corresponds to a nonstandard composite video signal (va, va', vd) and/or to a composite video signal (va', vd) which is not yet in a steady clamping state, the clamping current (ik) is dependent on the setpoint/actual-value comparison between a first reference value (sp) and a first comparison value (sm);
- in a second mode, which corresponds to a standard composite video signal (va', vd) and/or to a composite video signal (va', vd) which is in a steady clamping state, the clamping current (ik) is dependent on the setpoint/actual-value comparison between a second reference value (sw), which is different from the first reference value, and a second comparison value (bm), which is different from the first comparison value; and
- a controller (8) determines the respective mode from the composite video signal (va, va', vd).

2. A clamping circuit as claimed in claim 1, **characterized in that** the clamping level comparator circuit (4) evaluates a sync pulse top or sync pulse bottom value (sp) in the composite video signal (va', vd) as the first reference value and a back porch reference value (sw) in the composite video signal (va', vd) as the second reference value.

3. A clamping circuit as claimed in claim 1 or 2, **characterized in that** the clamping current (ik) remains essentially constant during at least one entire picture line.

4. A clamping circuit as claimed in any one of claims 1 to 3, **characterized in that** the sync pulse top or sync pulse bottom value (sp) is determined by means of a peak detector (4.2).

5. A clamping circuit as claimed in claim 4, **characterized in that** the peak detector (4.2) is fed with a composite video signal (va', vd) freed from noise components and/or useful-signal components by means of a filter (4.1).

6. A clamping circuit as claimed in claim 2, **characterized in that** the back porch reference value (sw) is determined from the composite video signal (va', vd) freed from noise components and/or useful-signal components by means of a filter (4.1) and/or by means of a gate controlled by a gating signal (k), with the gate being opened by the controller (8) during the back porch of the composite video signal (va', vd).

7. A clamping circuit as claimed in claim 5 or 6, **characterized in that** by means of the filter (4.1), the composite video signal (va', vd) is freed from the color burst (b).

## Revendications

1. Circuit de verrouillage d'un signal vidéo pour l'adaptation du niveau de tension continue d'un mélange de signaux vidéo (va, va', vd) au domaine de traitement d'un dispositif de traitement de signaux vidéo (2, 3) comportant :
- un condensateur de blocage (C) disposé dans le trajet des signaux vidéo,
- une source de courant (9) pouvant être commandée, qui est reliée au condensateur de blocage (C) au niveau de la connexion (ca) du condensateur qui doit être bloquée et qui alimente cette dernière avec un courant de verrouillage (ik) dont l'intensité et le signe algébrique sont réglables, et,
- un circuit de comparaison de niveau de verrouillage (4) pour le réglage du courant de verrouillage (ik) en fonction du niveau de tension continue du mélange de signaux vidéo (va, va', vd)
**caractérisé par** les particularités suivantes :
- le courant de verrouillage (ik) est, dans un premier mode, qui correspond à un mélange de signaux vidéo (va, va', vd) non conforme aux normes et/ou à un mélange de signaux vidéo (va', vd) qui ne se trouve pas dans un état permanent de verrouillage, une fonction de la comparaison de la valeur instantanée et de la valeur de consigne d'une première valeur de référence (sp) et d'une première valeur de comparaison (sm),
- le courant de verrouillage (ik) est, dans un deuxième mode, qui correspond à un mélange de signaux vidéo (va', vd) conforme aux normes et/ou qui se trouve dans un état permanent de verrouillage, une fonction de la comparaison de la valeur instantanée et de la valeur de consigne d'une deuxième valeur de référence (sw) différente de la première valeur de référence (sp) et d'une deuxième valeur de comparaison (bm) différente de la première valeur de comparaison (sm), et
- un circuit de commande (8) détermine le mode respectif à partir du mélange de signaux vidéo (va, va', vd).

2. Circuit de verrouillage selon la revendication 1, **caractérisé en ce que** le circuit de comparaison de niveau de verrouillage (4) évalue, en tant que première valeur de référence dans le mélange de signaux vidéo (va', vd), une valeur de plafond ou une valeur de plancher (sp) de l'impulsion de synchronisation et, en tant que deuxième valeur de référence dans le mélange de signaux vidéo (va', vd), une valeur de référence de palier du noir (sw).

3. Circuit de verrouillage selon la revendication 1 ou 2, **caractérisé en ce que** le courant de verrouillage (ik) reste sensiblement constant au moins pendant une ligne complète de la reproduction de l'image.

4. Circuit de verrouillage selon l'une quelconque des revendications 1 à 3, **caractérisé en ce que** la valeur de plafond ou la valeur de plancher (sp) de l'impulsion de synchronisation est déterminée au moyen d'un dispositif de détection de valeur extrême.

5. Circuit de verrouillage selon la revendication 4, **caractérisé en ce que** l'on envoie, au dispositif de détection de valeur extrême, un mélange de signaux vidéo (va', vd) filtré, au moyen d'un filtre (4.1), de composantes de bruit et/ou de composantes de signal utile.

6. Circuit de verrouillage selon la revendication 2, **caractérisé en ce que** la valeur de référence de palier du noir (sw) est déterminé à partir du mélange de signaux vidéo (va', vd) libéré des composantes de bruit et/ou des composantes de signal utile au moyen d'un filtre (4.1) et/ou d'un circuit de porte commandé par un signal de commutation de porte (k), le circuit de porte étant ouvert par le circuit de commande (8) pendant le palier du noir arrière du mélange de signaux vidéo (va', vd).

7. Circuit de verrouillage selon la revendication 5 ou 6, **caractérisé en ce que** le mélange de signaux vidéo (va', vd) est libéré du signal de synchronisation de couleur (b) au moyen du filtre (4.1).
